# EUROPEAN PATENT APPLICATION

(11) **EP 3 015 264 A1**
(43) Date of publication of application: **04.05.2016**
(21) Application number: 15184049.3
(22) Date of filing: 07.09.2015
(51) Int. Cl.: B32B 27/08, B32B 27/10, B32B 27/30, B32B 27/32, B32B 27/34, B32B 27/36, B32B 1/08

(54) **EXTRUSION LAMINATE MINERAL OIL BARRIER**

(30) Priority: 29.10.2014 US 201414526705
(71) Applicant: Sonoco Development, Inc., Hartsville, South Carolina 29550 (US)
(72) Inventor: BRANYON, Jacob, Hartsville, South Carolina 29550 (US); TORZON, Kristen, Hartsville, South Carolina 29550 (US)
(74) Representative: Reinhardt, Markus

(57) **Abstract**

A laminate structure for use as a liner (10, 100) in food packaging. The laminate structure includes a paper substrate layer (11), a metalized oriented polypropylene (mOPP) layer (13), an extruded mineral oil barrier layer (12) disposed between the paper substrate layer (11) and the mOPP layer (13) and an innermost polymer layer (14) disposed opposite the mOPP layer (13) from the extruded mineral oil barrier layer (12). The laminate structure is suitable for use as a liner (10,100) inside an outer shell (9) fabricated from pulp containing recycled materials as the liner (10,100) includes a mineral oil barrier layer (12) between the outer shell (9) and the inside of the package.

## Description

### Technical Field:

This document discloses packages for food items. More specifically, this document discloses food packages that include an outer shell fabricated from pulp containing recycled materials that contain mineral oil residue. The package includes a liner for the outer shell that includes an extruded mineral oil barrier layer that prevents or reduces any migration of mineral oil residue from the outer shell to an interior of the package.

### Description of the Related Art:

Paperboard packaging is produced from recycled paper. In the case of printed paper, especially newspaper, the recycled paper may contain mineral oil residues from the printing inks typically used to print newspapers. Even at room temperature, volatile compounds or volatiles evaporate from these residues. The mineral oil volatiles may include saturated hydrocarbons such as paraffinic and naphthenic hydrocarbons and aromatic hydrocarbons, especially those having 15-25 carbon atoms. Many of these volatiles are known health concerns. When manufacturers use paperboard for food packaging, mineral oil volatiles may migrate to the food items disposed within the packaging.

Accordingly, there is a need to protect food items packaged within recycled paperboard receptacles from contamination with mineral oil residue. One possibility is to dispense with the use of recycled newspaper in the production of paperboards for the packaging food. This is undesirable for ecological reasons and is impracticable due to the insufficient availability of virgin cellulose. Another solution would be to dispense with mineral oils in printing inks for newsprint. However, this solution would present technological obstacles for and resistance from the newsprint industry.

To address the migration of mineral oil volatiles, manufacturers of food packages have resorted to placing the food within a polymeric or wax paper bag before enclosing the bag within an outer paperboard structure. However, the use of such bags does not offer adequate protection from mineral oil volatiles as appreciable levels of mineral oil volatiles may still exist in food items packed in bags disposed within outer paperboard structures or shells.

Another solution is to employ one or more barrier coatings between the paperboard and the food. EP2689928 discloses the use of a polyamide mineral oil barrier layer that may be extruded onto the paperboard shell. However, an adhesive layer is required between the polyamide layer and other functional layers, such as a polyolefin seal layer. Further, in order to incorporate a moisture barrier layer, EP2689928 teaches the use of a foil layer, which requires primer or adhesive layers on either side of the foil layer. The use of foil, primer and adhesive layers requires additional processing, equipment and therefore adversely impacts the overall cost of food packages that include paperboard or recycled paper.

Accordingly, a need still exists for packaging which reduces the risk of the packaged food contents becoming contaminated with mineral oil volatiles when packaged inside of mineral oil contaminated, recycled paper or paperboard outer shell.

### SUMMARY OF THE DISCLOSURE

In one aspect, this application discloses a laminate structure for use as a liner for a package or an outer shell fabricated from pulp containing recycled materials. The disclosed laminate structure may include a paper substrate layer for adhering to the outer shell, a metalized oriented polypropylene (mOPP) layer, an extruded mineral oil barrier layer disposed between the paper substrate layer and the mOPP layer, and an innermost polymer layer disposed opposite mOPP layer from the extruded mineral oil barrier layer.

In another aspect, a package is disclosed. The disclosed package may include an outer shell fabricated from pulp containing recycled materials and a liner disposed along an inside surface of the outer shell. The liner may include a paper substrate layer, a mOPP layer, an extruded mineral oil barrier layer disclosed between the paper substrate layer and the mOPP layer, and an innermost polymer layer disposed opposite the mOPP layer from the extruded mineral oil barrier layer.

In yet another aspect, a method for fabricating a laminate structure is disclosed. The disclosed method may include providing a paper substrate layer and extruding as least one layer onto the paper substrate layer, wherein the at least one layer includes a mineral oil barrier layer. The method may further include adhering a mOPP layer onto the at least one layer and extruding a polymer layer onto the mOPP layer.

In any one or more of the embodiments disclosed above, the paper substrate layer is fabricated from virgin paper pulp.

In any one or more of the embodiments disclosed above, the innermost polymer layer is a polyethylene layer.

In any one or more of the embodiments described above, the extruded mineral oil barrier layer adheres the mOPP layer onto the paper substrate layer.

In any one or more of the embodiments described above, the extruded mineral oil barrier is extrusion laminated with a polymer tie layer onto the paper substrate layer.

In any one or more of the embodiments described above, the extruded mineral oil barrier layer may be coextruded with an outer polymer tie layer that adheres the mineral oil barrier layer to the paper substrate layer and a middle polymer tie layer that adheres mOPP layer to the mineral oil barrier layer.

In any one or more of the embodiments described above, the extruded mineral oil barrier layer is extrusion laminated with an outer polymer tie layer and a middle polymer tie layer onto the paper substrate layer. In such an embodiment, the outer polymer tie layer adheres the mineral oil barrier layer to the paper substrate layer and the middle polymer tie layer adheres to the mOPP layer to the mineral oil barrier layer.

In any one or more of the embodiments described above, an outer polymer tie layer may be disposed between the mineral oil barrier layer and the paper substrate layer.

In any one or more of the embodiments described above, at least one layer that is extruded onto the paper substrate layer is extrusion laminated in a single process.

The features, functions, and advantages discussed above can be achieved independently in various embodiments or may be combined in yet other embodiments, further details of which can be seen with reference to the following description and drawings.

### BRIEF DESCRIPTION OF THE DRAWINGS

For a more complete understanding of the disclosed methods and apparatuses, reference should be made to the embodiments illustrated in greater detail on the accompanying drawings, wherein:
FIG. 1 is a partial sectional view of a disclosed laminate structure suitable for use as a liner for an outer shell made from pulp containing recycled materials.
FIG. 2 is a sectional view of another disclosed liner for an outer shell made from pulp containing recycled materials.

The drawings are not necessarily to scale and the disclosed embodiments are illustrated diagrammatically and in partial views. In certain instances, details which are not necessary for an understanding of the disclosed methods and apparatuses or which render other details difficult to perceive may have been omitted. It should be understood, of course, that this disclosure is not limited to the particular embodiments illustrated herein.

### DETAILED DESCRIPTION OF THE PRESENTLY PREFERRED EMBODIMENTS

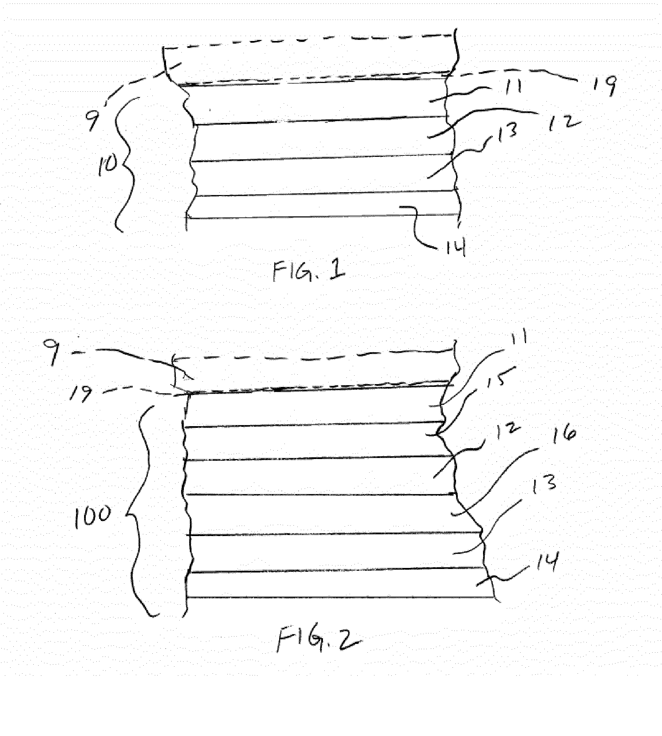

Turning to FIG. 1, a disclosed laminate structure or liner 10 is illustrated that may be used as a liner for an outer structure or outer shell 9 that may be fabricated from recycled paper or paperboard that may include mineral oil residue. As noted above, mineral oil residue may include mineral oil volatiles, such as saturated hydrocarbons and aromatic hydrocarbons, which may present health concerns, particularly if the outer shell 9 is used for packaging food. The disclosed laminate structure or liner 10 may be advantageously used as a liner for a package that includes a recycled outer shell 9 because the liner 10 reduces or restricts mineral oil residue or mineral oil volatiles from migrating from the outer shell 9 to an interior of the package. The liner 10 may be adhered to the outer shell 9 using a conventional adhesive 19.

The liner 10 may include a paper substrate layer 11 and a mineral oil barrier layer 12 that may be laminated or extruded onto the paper substrate layer 11. Further, the mineral oil barrier layer 12 may be adhered to a metalized oriented polypropylene (mOPP) layer 13. The mOPP layer 13 may serve as a moisture barrier layer. Other suitable moisture barrier layers include, but are not limited to metallized layers of polyester (e.g., polyethylene terephthalate (PET), polypropylene (bi-axially oriented (BOPP), oriented (OPP), polyethylene (high, low and medium densities) and ethylene vinyl alcohol (EVOH). Thickness for the mOPP layer 13 (or moisture barrier layer) may range from about 12 to about 30 microns. To enhance the sealability of the liner 10 (or liner), an inner polymer layer 14 may be included. The inner polymer layer 14 may be polyethylene or another suitable polymer that is impermeable to air. Examples of other polymers suitable for sealing a package include polypropylene, metallized polypropylene, polyester and metallized polyester. A suitable thickness for the inner polymer layer 14 may range from about 12 to about 60 microns. As shown in FIG. 2, polymer tie layers 15, 16 may be included in an alternate laminate structure or liner100. When used as tie layers 15, 16, the polymer thickness may range from about 8 to about 48 microns.

In the liner 10 shown in FIG. 1, the mineral oil barrier layer 12 may serve as an adhesive layer or tie layer for purposes of adhering the mOPP layer 13 to the paper substrate layer 11. Typically, an adhesive layer or a tie layer is required between a paper substrate layer 11 and a mOPP layer 13. However, by providing a mineral oil barrier layer 12 with the mOPP layer 13 and/or with the mOPP layer 13 and the inner polymer layer 14, no additional adhesive or tie layer is required between the mOPP layer 13 and the paper substrate layer 11. The mineral oil barrier layer 12 effectively adheres the mOPP layer 13 to the paper substrate layer 11. Thus, the liner 10 of FIG. 1 may include a mineral oil barrier layer 12 without requiring additional processing or substantial equipment costs because the mineral oil barrier layer 12 serves as an adhesive layer as well. The inner polymer layer 14 and/or the mineral oil barrier layer 12 may be extrusion laminated onto the mOPP layer 13.

The mineral oil barrier layer 12 may be an extrudable version of one or more of the following polymers: polyamide (e.g. Nylon™), polyester, EVOH, polyvinylidene chloride (PVdC), and blends thereof. Further, blends of the above polymers and polyethylene may be used for the mineral oil barrier layer 12.

Turning to FIG. 2, an alternative laminate structure or liner 100 is disclosed. The liner 100 may include a paper substrate layer 11 adhered to the outer shell 9 by an adhesive layer 19, a mineral oil barrier layer 12 and a mOPP layer 13. One or more polymer layers 14 and 16 may be extrusion laminated onto mOPP layer 13. Further, the outer polymer layer 15, the mineral oil barrier layer 12, and the middle polymer layer 16 may be extrusion laminated onto the mOPP layer 13 or onto the paper substrate layer 11. The outer polymer layer 15 may be used as a tie layer or an adhesive layer for purposes of adhering the mineral oil barrier layer 12 to the paper substrate layer 11. Further, in such an embodiment, the middle polymer layer 16 may be used as an adhesive layer or tie layer to secure the mOPP layer 13 to the mineral oil barrier layer 12. Further, the optional inner polymer layer 14 may be disposed inside the mOPP layer for enhancing the sealability of the liner 100 if the desired sealability is not obtained through the use of the tie layers 15, 16.

Extrusion temperatures are dependent on the resin being extruded, but may fall within the range of from about 100°C to about 300°C. Web speed may fall within the range of from about 300 ft/min to about 1000 ft/min. Slot dies are typically used for extruding. Extruders and dies can incorporate the ability to extrude only one polymer at a time or multiple polymers at once. For example, referring to FIG. 1, an extruder with two feed hoppers and screws may be employed to extrusion laminate the mineral oil barrier layer 12 and the polymer layer 14 onto the mOPP layer 13. The "first" hopper and screw may be used for the mineral oil barrier layer 12 and the second hopper and screw may be used for the inner polymer layer 14. The mineral oil barrier layer 12 may also be extrusion laminated onto the paper substrate layer 11. Referring to FIG. 2, an extruder with four feed hoppers and screws may be used to extrusion laminate the layers 15, 12, 16 and 14 onto either side of the mOPP layer 13.

### INDUSTRIAL APPLICABILITY

Mineral oil migration presents a problem to the food packaging industry because of the extensive use of recycled paper in packaging in the form of paperboard used as an outer shell for food packaging. Paperboard manufactured from pulp containing recycled materials contains various levels of mineral oil. Mineral oil includes volatiles that can migrate into the food product and can present health risks. Some countries are in the process of passing legislation to require food packing that contains recycled paperboard to include a barrier layer that prevents or reduces mineral oil migration from the paperboard shell to the food product.

Disclosed herein are liners 10, 100 for a paperboard package or outer shell 9. The liners 10, 100 each feature a mineral oil barrier layer 12 as an extrusion coating for lamination purposes. Specifically, the mineral oil barrier layer 12 may be used in the liner 10 (FIG. 1) as an extruded adhesive or a tie layer for purposes of adhering another functional layer, such as a mOPP layer 13 to the paper substrate layer 11. Because such an adhesive or tie layer would be required anyway, the inclusion of a mineral oil barrier layer 12 between the mOPP layer 13 and the paper substrate layer 11 does not require additional process steps or substantial changes in equipment. The mineral oil barrier layer 12 disclosed herein may be extrusion laminated onto the mOPP layer 13 or the paper substrate layer 11 alone or with additional adhesive or tie layers 15, 16 as desired. By employing a mineral oil barrier layer 12 in a lamination process as an adhesive or a tie layer, the cost impact of including a mineral oil barrier layer 12 is minimal. Further, the mineral oil barrier layer 12 as disclosed herein may be sandwiched between the paper substrate layer 11 and a functional layer, such as the mOPP layer 13 and therefore is protected from outside elements making the mineral oil barrier layer 12 durable and stable. Further, the mineral oil barrier layer 12 can be extrusion laminated onto the mOPP layer 13 with one or more of the polymer layers 14, 15, 16, thereby minimizing the impact of incorporating the mineral oil barrier layer 12.

While only certain embodiments have been set forth, alternative embodiments and various modifications will be apparent from the above description to those skilled in the art. These and other alternatives are considered equivalents and within the spirit and scope of the present disclosure.

## Claims

1. A liner (10, 100) for an outer shell (9) made from pulp containing recycled materials, the liner (10, 100) comprising:
a paper substrate layer (11);
a metalized oriented polypropylene (mOPP) layer (13);
an extruded mineral oil barrier layer (12) disposed between the paper substrate layer (11) and the mOPP layer (13); and
an innermost polymer layer (14) disposed opposite the mOPP layer (13) from the extruded mineral oil barrier layer (12).

2. The liner (10, 100) of claim 1 wherein the paper substrate layer (11) is fabricated from virgin pulp.

3. The liner (10, 100) of claim 1 wherein the extruded mineral oil barrier layer (12) adheres the mOPP layer (13) to the paper substrate layer (11).

4. The liner (10, 100) of claim 1 wherein the extruded mineral oil barrier layer (12) is extrusion laminated onto the mOPP layer (13).

5. The liner (10, 100) of claim 1 wherein the extruded mineral oil barrier layer (12) and the innermost polymer layer (14) are extrusion laminated onto opposite sides of the mOPP layer (13).

6. The liner (10, 100) of claim 1 wherein the extruded mineral oil barrier layer (12) is extrusion laminated with an outer polymer tie layer (15) that adheres the mineral oil barrier layer (13) to the paper substrate layer (11) and a middle polymer tie layer (16) that adheres the mOPP layer (13) to the mineral oil barrier layer (12).

7. The liner (10, 100) of claim 1 wherein the extruded mineral oil barrier layer (12) is extrusion laminated with an outer polymer tie layer (15) and a middle polymer tie layer (16) onto the mOPP layer (13), wherein the outer polymer tie layer (15) adheres the mineral oil barrier layer (12) to the paper substrate layer (11) and the middle polymer tie layer (16) adheres the mOPP layer (13) to the mineral oil barrier layer (12).

8. A package comprising:
an outer shell (9) comprising pulp containing recycled materials;
a paper substrate layer (11) adhered to the outer shell (9);
a metalized oriented polypropylene (mOPP) layer (13);
an extruded mineral oil barrier layer (12) disposed between the paper substrate layer (11) and the mOPP layer (13);
an innermost polymer layer (14) disposed opposite the mOPP layer (13) from the extruded mineral oil barrier layer (12).

9. The package of claim 8 wherein the paper substrate layer (11) is fabricated from virgin pulp.

10. The package of claim 8 wherein the outer shell (9) includes mineral oil residue.

11. The package of claim 8 wherein the extruded mineral oil barrier layer (12) adheres the mOPP layer (13) to the paper substrate layer (11).

12. The package of claim 8 wherein the extruded mineral oil barrier layer (12) is extrusion laminated onto the mOPP layer (13).

13. The package of claim 8 wherein the extruded mineral oil barrier layer (12) is extrusion laminated with an outer polymer tie layer (15) that adheres the mineral oil barrier layer (12) to the paper substrate layer (11) and a middle polymer tie layer (16) that adheres the mOPP layer (13) to the mineral oil barrier layer (12).

14. The package of claim 8 wherein the extruded mineral oil barrier layer (12) is extrusion laminated with an outer polymer tie layer (15) and a middle polymer tie layer (16) onto the mOPP layer (13), wherein the outer polymer tie layer (15) adheres the mineral oil barrier layer (12) to the paper substrate layer (11) and the middle polymer tie layer (16) adheres the mOPP layer (13) to the mineral oil barrier layer (12).

15. The package of claim 1 wherein the package is tubular.

16. A method for fabricating a laminate structure for use as a liner (10) for an outer shell (9) fabricated from pulp containing recycled materials, the method comprising:
providing a paper substrate layer (11);
extruding at least one layer onto the paper substrate layer (11), wherein the at least one layer includes a mineral oil barrier layer (12);
adhering a metalized oriented polypropylene (mOPP) layer (13) onto the at least one layer;
extruding a polymer layer (14) onto the mOPP layer (13).

17. The method of claim 16 wherein the at least one layer includes an outer polymer tie layer (15) that adheres the mineral oil barrier layer (12) to the paperboard layer (11) and a middle polymer tie layer (16) that adheres the mOPP layer (13) to the mineral oil barrier layer (12).

18. The method of claim 17 wherein the at least one layer includes an outer polymer tie layer (15) that adheres the mineral oil barrier layer (12) to the paper substrate layer (11).

19. The method of claim 16 wherein the paper substrate layer (11) is fabricated from virgin pulp.

20. The method of claim 16 wherein the at least one layer is extrusion laminated in a single process.
